# EUROPÄISCHE PATENTSCHRIFT

(11) **EP 0 614 426 B1**
(45) Veröffentlichungstag und Bekanntmachung des Hinweises auf die Patenterteilung: **14.06.1995**
(21) Anmeldenummer: 92923794.9
(22) Anmeldetag: 25.11.1992
(51) Int. Cl.: B60R 13/08, G10K 11/16

(54) **FÜLLKÖRPER ALS FORMTEIL ZUR ABDICHTUNG SCHWER ZUGÄNGLICHER HOHLRÄUME**
SHAPED FILLER BODY FOR SEALING CAVITIES WHICH ARE DIFFICULT OF ACCESS
CORPS DE REMPLISSAGE EN FORME DE PIECE MOULEE POUR L'OBTURATION DE CAVITES DIFFICILEMENT ACCESSIBLES

(30) Priorität: 03.12.1991 DE 4139858
(43) Veröffentlichungstag der Anmeldung: 14.09.1994
(73) Patentinhaber: Stankiewicz GmbH, D-29352 Adelheidsdorf (DE)
(72) Erfinder: WALENDY, Hans, D-3101 Wathlingen (DE); PÜSCHMANN, Eberhard, D-3101 Nienhagen (DE); RIGGERS, Edmund, D-3102 Hermannsburg (DE)
(74) Vertreter: Melzer, Wolfgang, Dipl.-Ing.
(86) Internationale Anmeldenummer: EP9202717
(87) Internationale Veröffentlichungsnummer: WO9311001

(56) Entgegenhaltungen:
- EP-A- 0 447 939
- DE-A- 3 506 004
- DE-A- 3 842 890
- DE-U- 8 707 140

## Beschreibung

Die Erfindung betrifft einen Füllkörper als Formteil gemäß dem Oberbegriff des Anspruchs 1.

Gemäß DE-A-35 06 004 ist ein aus offenzelligem Schaumstoff bestehender Füllkörper bekannt, der den Vorteil der aus der Komprimierung zu erzielenden günstigen Lagerhaltung und des Versandes hat, andererseits aber selbst bei engen Aufnahmeräumen günstigst einbringbar ist. Der Füllkörper wird in der gelieferten komprimierten Form in den Aufnahmeraum eingesetzt. Nach Positionierung wird die Hüllfolie verletzt, wobei sich der Füllkörper spontan ausdehnt, sich an den maximalen Rückstellquerschnitt anschmiegt, wobei die Rückstellkraft zur Lagesicherung des eingesteckten Füllkörpers genutzt werden kann.

Der Füllkörper wird in geschlossene Profile, wie z. B. Kastenprofile eingeführt, die an einem oder beiden Enden offen sind. Der bekannte Füllkörper ist jedoch nicht selbsttragend, wodurch eine sichere Verbaubarkeit bei in Längsrichtung offenen Profilen oder ansonsten offenen Hohlräumen, bei schwieriger Zugänglichkeit dieser Profile und/oder bei komplizierter Geometrie nicht möglich ist.

Ein weiterer Stand der Technik wird in DE-U-87 07 140 genannt, in der ein Füllkörper zur akustischen Abdichtung rohrförmiger Körper beschrieben ist. In dem genannten Gebrauchsmuster wird ein Füllkörper dargestellt, der zum Erzielen einer zuverlässigen und schnellen, der jeweiligen Situation anpaßbaren akustischen Abdichtung von rohrförmigen Hohlkörpern geeignet ist und den Nachteil vermeidet, daß er nur an leicht zugänglichen Stellen angebracht werden kann. Für diesen Füllkörper werden eine spezielle Schaumabmischung angegeben und ebenso weitere Merkmale, wie Raumgewicht (Dichte), offener Porenanteil, eine bestimmte Rückprall-Elastizität und eine hohe Rückstellgeschwindigkeit. Er wird ebenfalls unter Verwendung von Vakuum in die rohrförmigen Hohlkörper eingeführt, wonach anschließend das Vakuum in der Umhüllung beseitigt wird. Auch dieser Füllkörper ist nicht selbsttragend bzw. formstabil und läßt sich nur in Rohrprofilen verwenden.

Demzufolge besteht die Aufgabe der Erfindung darin, einen Füllkörper bereitzustellen, der Eigenstabilität besitzt und montagesicher an schwer zugänglichen und/oder räumlich kompliziert verformten Karosseriebereichen insbesondere bei großflächigen offenen Hohlräumen eingebracht werden kann.

Diese Aufgabe wird durch die Merkmale des Anspruchs 1 gelöst.

Die Erfindung gibt somit ein Formteil aus einem elastischen Material insbesondere Schaumstoff, mit einer flächig ausgebildeten Einlage mit relativ geringer Materialdicke an, wobei die Einlage so angeordnet ist, daß ihre Querrichtung parallel zur Querrichtung des sie umhüllenden elastischen Materials liegt. Als Material für die Einlage können preiswerte Produkte, z. B. durch Recyclingverfahren gewonnene Materialien, oder z. B. Pappe verwendet werden, sofern sie ausreichend selbsttragend sind. Das Formteil wird folienumhüllt und durch Vakuum gepreßt, so daß es in schwer zugängliche Karosseriehohlräume eingebracht werden kann und dort nach Entfernen des Vakuums Dichtfunktionen und Geräuschdämmungsfunktionen übernimmt.

Die mit der Erfindung erzielten Vorteile bestehen insbesondere darin, daß durch Einbringen der biegesteifen, flachen Einlage in den Füllkörper, dieser selbsttragend ist und eine hohe Biegesteifigkeit in mindestens einer Richtung aufweist, wobei diese Richtung gleichzeitig die Einbringrichtung in den Hohlraum ist. Durch das Einbringen der biegesteifen und flachen Einlage in den Füllkörper wird die Montagesicherheit gewährleistet und dem Füllkörper Eigenstabilität gegeben. Die so ausgebildeten Füllkörper können nahezu beliebige Formen aufweisen.

Der Gegenstand der vorliegenden Erfindung wird durch die Unteransprüche weitergebildet.

Die Erfindung wird anhand des in der Zeichnung dargestellten Ausführungsbeispiels näher erläutert.
Fig. 1 zeigt schematisch in Draufsicht eine Ausführungsform des Füllkörpers;
Fig. 2 zeigt schematisch zur Darstellung des Aufbaus einen Schnitt durch den Füllkörper nach Fig. 1.

Der in den Figuren dargestellte Füllkörper 1 hat beispielsweise eine Form, die einem Bumerang ähnlich ist. Es soll also ein flacher, abgewinkelter, aber dennoch langgestreckter Körper betrachtet werden. Zur Erreichung des erfindungsgemäßen Füllkörpers 1 wird das flache abgewinkelte Gebilde in Querrichtung aufgeschnitten und wird in diesem Einschnitt 2 eine flache Einlage 3 mit relativ geringer Materialdicke so angeordnet, daß ihre Querrichtung parallel zur Querrichtung des sie umhüllenden elastischen Materials 4 liegt. Die Einlage 3 kann auch durch Umformen mit dem Material 4 ohne gesonderten Einschnitt 2 eingebracht werden. Der Füllkörper 1 ist somit aus drei Schichten (Bereich des Materials 4 rechts der Einlage 3, Einlage 3, Bereich des Matrials 4 links der Einlage 3) zusammengesetzt. Diese drei Schichten werden in der Regel bereits durch Reibungskräfte zusammengehalten. Sollte diese Haftreibung nicht ausreichen, ist es möglich, die Schichten durch gesonderte zusätzliche Maßnahmen, wie Verkleben oder Erhöhen der Reibungskräfte durch rauhe Oberflächen der Einlage 3 miteinander zu verbinden. Bei flachen langgestreckten Füllkörpern 1 ist die Biegesteifigkeit um die Hochachse (quer zur längsten Ausdehnung) immer sehr hoch. Wenn diese Ebene hoher Biegesteifigkeit als Einbringrichtung gewählt wird, also senkrecht auf der Montageebene steht, ist ein sicheres Einführen auch in schwer zugängliche und kompliziert verformte Karosserie-Bereiche 5 möglich.

Vor dem Einbringen eines Füllkörpers 1 in die vorgesehenen Bereiche 5 zu deren akustischen Abdichtung werden die Füllkörper 1 mit Kunststoffolien 6 von etwa 10 »m bis 50 »m Dicke umhüllt und wird ein Vakuum in bekannter Weise angelegt. Durch das Anlegen des Vakuums wird zwar jede Abmessung etwas verkleinert, jedoch begrenzt die in einer Biegerichtung sehr steife Einlage 3 diesen Vorgang, lediglich die Dicke des die Einlage 3 umgebenden Schaumstoffmaterials 4 wird stark komprimiert. Die für den Montagevorgang erforderliche Biegesteife bleibt dabei erhalten.

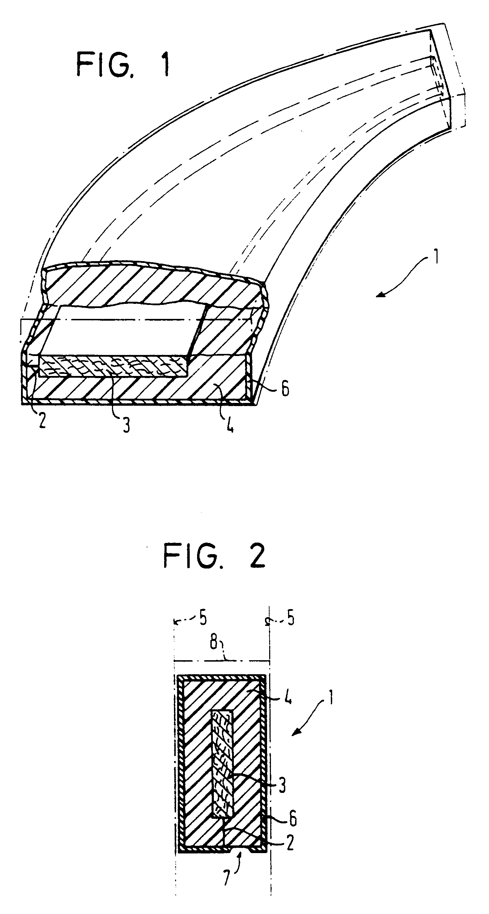

Der Aufbau des Füllkörpers 1 gemäß dieser Erfindung ermöglicht es, daß jeder beliebige Hohlraum mittels eines entsprechend gestalteten Füllkörpers 1 abgedichtet werden kann und eine Beschränkung auf rohrförmige oder kastenförmige Profile nicht mehr erforderlich ist. Notwendig sind lediglich zwei Flächen in Abstand voneinander (vergl. Fig. 2), zwischen die der Füllkörper 1 eingebracht und nach Beseitigen des Vakuums durch Aufreißen (Aufreißstelle 7) der Folie 6 (Fig. 2) durch die Rückstellkräfte auf Passung gebracht werden kann. Der Füllkörper 1 kann jedoch auch in anders geformte Hohlräume - wie durch eine Strich-Doppelpunkt-Linie 8 angedeutet - eingebracht werden.

Die sichere Verbaubarkeit ist auch dann gegeben, wenn beim Einbringen eines erfindungsgemäßen Füllkörpers 1 mechanische Widerstände auftreten. Diese können durch Kraft überwunden werden. Die beschriebene Einlage 3 kann bei sehr kompliziert geformten Hohlräumen abschnittsweise gegeneinander verdreht werden, jedoch muß die Montage des Füllkörpers 1 in Richtung jeweils größter Biegesteifigkeit erfolgen und die gegeneinander verwinkelten bzw. verdrehten Abschnitte der Einlage 3 sollten vorzugsweise nicht voneinander getrennt sein.

Als elastische Materialien 4 zur Umhüllung der Einlage 3 sind Schnittschäume sowie Formschäume oder Flockenschaum und im übrigen alle porösen Materialien geeignet, die genügend hohe Rückstellkräfte (aus dem evakuierten Zustand) entfalten können. Für ein Ausführungsbeispiel gilt: Für den Füllkörper 1 werden als Material 4 Schnittschäume üblicher Qualität verwendet. Er ist mit einer mittig angeordneten Einlage 3 aus Pappe versehen. Der verwendete Schaum hat eine Dichte von 20 kg/m³. Die gegen Verschiebung gesicherte Einlage 3 aus Pappe ist vorzugsweise in der Mitte des Schnittschaumes, beispielsweise Polyether oder PUR-Schaum, der eine Rohdichte von (20 ± 4) kg/m³ besitzt, eingebracht und hat z. B. eine Dicke von 3 ± 0,5 mm bei einer entsprechenden Kantenlänge des Füllkörpers 1 von 30 mm. Dieser Schnittschaum ist von einer transparenten PUR-Folie 6 umgeben, die wasserdicht, temperaturbeständig und funktionsfähig in Temperaturbereichen von -40 °C bis + 120 °C ist. Die Auswahl ist für den Durchschnittsfachmann auf diesem Gebiet durch einen einfachen, schnell durchzuführenden Versuch möglich. Ebenso wird das Vakuum vor der Montage nach allgemein bekanntem Stand der Technik erreicht. Die erforderlichen Unterdrücke und der Einbau der Füllkörper 1 an vorbezeichneten Stellen oder Bereichen ist für den Durchschnittsfachmann ohne nennenswerten Aufwand durch einfachen Versuch möglich.

Neben den Schnittschäumen sind auch Formschäume verwendbar, zumeist mit etwa 80 kg/m³. Ebenso können recycelte Schaumstoffe in Form von Flocken mit und ohne Bindemittel genommen werden. Die Verarbeitung dieser Materialien 4 erfolgt in üblicher Weise.

Die Verwendung der Füllkörper 1 ist für Hohlräume 5 vorgesehen, die z. B. durch das äußere Karosserieblech und die inneren Abschottungen zum Kofferraum im Bereich der Zwangsentlüftungen gebildet werden. Durch das Einbringen der Füllkörper 1 wird eine akustische und thermische Dichtung erreicht. Eine Verwendung in ähnlich gelagerten Problemfällen außerhalb der Fahrzeugindustrie ist ebenfalls möglich und in gleicher Weise wirksam.

## Patentansprüche

1. Füllkörper (1) zur akustischen und thermischen Abdichtung von Hohlräumen in Fahrzeugkarosserien, ausgebildet als folienumhülltes Formteil aus elastischem, porösen Material (4) mit ausreichender Rückstell-Elastizität, das vor dem Einbringen in den Hohlraum (5) unter Vakuum gesetzt ist, dadurch gekennzeichnet, daß das Formteil selbsttragend ist und in Einbringrichtung, die senkrecht zur Montageebene steht, durch eine flache, dünne Einlage (3) eine hohe Biegesteifigkeit aufweist.

2. Füllkörper (1) als Formteil nach Anspruch 1, dadurch gekennzeichnet, daß es dreischichtig ist, wobei das elastische, poröse Material (4) mit ausreichender Rückstell-Elastizität die Einlage (3) vollständig umschließen oder an den Rändern mit ihr abschließen kann.

3. Füllkörper (1) als Formteil nach Anspruch 1 bis 2, dadurch gekennzeichnet, daß es eine Einlage (3) enthält, die abschnittsweise gegeneinander verwinkelt ist, wobei die Abschnitte voneinander jedoch nicht getrennt sein sollen.

4. Füllkörper (1) als Formteil nach Anspruch 1 bis 3, dadurch gekennzeichnet, daß es beliebige Hohlräume (5) abdichtet, die lediglich 2 Flächen auf Abstand voneinander enthalten und nach Entfernen des Vakuums durch die Rückstellkräfte auf Passung gebracht wird.

5. Füllkörper (1) als Formteil nach Anspruch 1 bis 3, dadurch gekennzeichnet, daß es an schwer zugänglichen und räumlich kompliziert verformten Karosseriebereichen (5) appliziert wird.

6. Füllkörper (1) als Formteil nach Anspruch 1 bis 3, dadurch gekennzeichnet, daß es als Einlage (3) selbsttragende Materialien enthält, wie z. B. Pappe.

7. Füllkörper (1) als Formteil nach Anspruch 1 bis 3, dadurch gekennzeichnet, daß die Einlage (3) verschiebegesichert ist.

8. Füllkörper (1) als Formteil nach Anspruch 1 bis 7, dadurch gekennzeichnet, daß es eine an sich beliebige Form hat, bevorzugt jedoch flach, langgestreckt und abgewinkelt ist.

## Claims

1. Filler body (1) for acoustic and thermal sealing of hollow spaces in vehicle bodies, constituted as a molded part of resilient, porous material (4) of sufficient restoring resilience, enveloped in foil, which is subjected to a vacuum prior to introduction into the hollow space (5), characterised in that the molded part is self-supporting and has, in the direction of introduction, which is perpendicular to the plane of installation, a large bending stiffness by virtue of a flat, thin intermediate layer (3).

2. Filler body (1) as molded part according to claim 1, characterised in that the body is triple-layered, whereby the resilient, porous material (4) of sufficient restoring resilience can completely surround the intermediate layer (3) or can match the edges of the intermediate layer.

3. Filler body (1) as molded part according to claim 1 or 2, characterised in that it contains an intermediate layer (3) sections of which are twisted one to another, whereby however the sections should not be separated from one another.

4. Filler body (1) as molded part according to any of claims 1 to 3, characterised in that it seals arbitrary hollow spaces (5) which merely have 2 surfaces spaced apart from one another and after removal of the vacuum is brought into a fit by the restoring forces.

5. Filler body (1) as molded part according to any of claims 1 to 3, characterised in that it is applied at vehicle body regions (5) which are poorly accessible and formed in a spatially complicated fashion.

6. Filler body (1) as molded part according to any of claims 1 to 3, characterised in that it contains self-supporting material as intermediate layer (3), such as for example cardboard.

7. Filler body (1) as molded part according to any of claims 1 to 3, characterised in that the intermediate layer (3) is secured against displacement.

8. Filler body (1) as molded part according to any of claims 1 to 7, characterised in that it has a form which is per se arbitrary, preferably however flat, elongate and bent.

## Revendications

1. Corps de remplissage (1) pour l'isolation acoustique et thermique de cavités dans des carrosseries de véhicules, conformé sous la forme d'une pièce moulée gainée de film, en matériau (4) élastique et poreux ayant une élasticité de rappel suffisante, qui est mise sous vide avant l'introduction dans la cavité (5),
**caractérisé** en ce que la pièce moulée est autoportante et présente dans le sens d'introduction, lequel est perpendiculaire au plan de montage, une grande rigidité à la flexion, grâce à une semelle interne (3) plate et mince.

2. Corps de remplissage (1) sous la forme d'une pièce moulée selon la revendication 1, caractérisé en ce qu'il est constitué de trois couches, le matériau (4) élastique et poreux ayant une élasticité de rappel suffisante entourant complètement la semelle interne (3) ou pouvant se raccorder à elle sur les bords.

3. Corps de remplissage (1) sous la forme d'une pièce moulée selon les revendications 1 et/ou 2, caractérisé en ce qu'il contient une semelle interne (3) qui présente des tronçons disposés sous une forme sinueuse, les différents tronçons ne devant toutefois pas être séparés les uns des autres.

4. Corps de remplissage (1) sous la forme d'une pièce moulée selon les revendications 1 à 3, caractérisé en ce qu'il assure l'isolation de cavités (5) de forme quelconque contenant seulement deux surfaces espacées l'une de l'autre, et qu'après enlèvement du vide, il est amené en ajustement par les forces de rappel.

5. Corps de remplissage (1) sous la forme d'une pièce moulée selon les revendications 1 à 3, caractérisé en ce qu'il est appliqué dans des zones de carrosserie (5) difficilement accessibles et présentant des formes spatialement compliquées.

6. Corps de remplissage (1) sous la forme d'une pièce moulée selon les revendications 1 à 3, caractérisé en ce qu'il contient, en tant que semelle interne (3), des matériaux auto-porteurs tels que, par exemple, du carton.

7. Corps de remplissage (1) sous la forme d'une pièce moulée selon les revendications 1 à 3, caractérisé en ce que la semelle interne (3) est empêchée de coulisser.

8. Corps de remplissage (1) sous la forme d'une pièce moulée selon les revendications 1 à 7, caractérisé en ce qu'il a une forme intrinséquement quelconque, au choix, mais est cependant, de préférence, plat, allongé et de forme sinueuse.
